# EUROPÄISCHE PATENTSCHRIFT

(11) **EP 1 924 117 B1**
(45) Veröffentlichungstag und Bekanntmachung des Hinweises auf die Patenterteilung: **26.10.2011**
(21) Anmeldenummer: 08002827.7
(22) Anmeldetag: 19.05.2006
(51) Int. Cl.: H04W 12/02

(54) **Verfahren und Simulator zur Ausführung erfassender und manipulativer Zugriffe auf ein mobiles Endgerät**
Method and simulator for effecting registrative and manipulative accesses to a mobile terminal
Procédé et simulateur pour effectuer des accès registratifs et manipulatifs sur un terminal mobile

(30) Priorität: 23.08.2005 DE 102005040002
(43) Veröffentlichungstag der Anmeldung: 21.05.2008
(62) Teilanmeldung aus: 06753729.0
(73) Patentinhaber: Thales Defence Deutschland GmbH, 75117 Pforzheim (DE)
(72) Erfinder: Kouadjo, Larisse Nana, Toronto, ON M8V1E8 (CA); Gunzelmann, Georg, 75446 Wiernsheim (DE)
(74) Vertreter: Dreiss

(56) Entgegenhaltungen:
- WO-A-02/01902
- WO-A-2005/011318
- DE-A1- 19 920 222
- "Universal Mobile Telecommunications System (UMTS); 3G security; Handover interface for Lawful Interception (LI) (3GPP TS 33.108 version 6.8.2 Release 6); ETSI TS 133 108" ETSI STANDARDS, EUROPEAN TELECOMMUNICATIONS STANDARDS INSTITUTE, SOPHIA-ANTIPO, FR, Bd. 3-SA3, Nr. V682, Januar 2005 (2005-01), XP014028214 ISSN: 0000-0001

## Beschreibung

Die vorliegende Erfindung betrifft ein Verfahren zur Ausführung erfassender oder manipulativer Zugriffe auf ein mobiles Endgerät in einem digitalen zellulären Mobilfunknetz, in dem Daten nach einem ersten Protokoll übertragen werden, mittels eines in räumlicher Nähe zu dem Endgerät angeordneten Simulators. Das Endgerät wird identifiziert, indem Identifikationsparameter des Endgeräts ermittelt werden. Die gesamte Identifizierung erfolgt im Umfeld des digitalen zellulären Mobilfunknetzes, in dem Daten nach dem ersten Protokoll übertragen werden.

Die Erfindung betrifft auch einen Simulator zur Ausführung erfassender oder manipulativer Zugriffe auf ein mobiles Endgerät, das in einem digitalen zellulären Mobilfunknetz Daten nach einem ersten Protokoll sendet und empfängt. Der Simulator ist in räumlicher Nähe zu dem mobilen Endgerät angeordnet. Der Simulator weist ein Messsystem zur Ermittlung der für die Datenübertragung relevanten Parameter von Basisstationen des Mobilfunknetzes in räumlicher Nähe zum Simulator im Umfeld des ersten Protokolls auf. Des weiteren weist der Simulator Mittel zum Betreiben des Simulators als eine neue Basisstation des Mobilfunknetzes im Umfeld des ersten Protokolls unter Berücksichtigung der ermittelten Parameter auf. Schließlich weist der Simulator Mittel zum Identifizieren des Endgeräts im Umfeld des ersten Protokolls auf.

Sicherheitskräften obliegen unter anderem die Aufgaben, bereits begangene Verbrechen aufzuklären bzw. noch nicht begangene Verbrechen abzuwehren. Ein wichtiger Aspekt bei der Erfüllung dieser Aufgaben ist die Möglichkeit, in Ausnahmefällen eine verdächtige Person anhand eines von ihr benutzten Mobiltelefons identifizieren und von der Person über das Mobiltelefon geführte Telefongespräche abhören, aufzeichnen und auswerten zu können. Die Sicherheitskräfte werden dazu durch einschlägige Rechtsvorschriften und Verordnungen ermächtigt. Ziel ist es dabei, die Kommunikations-Spuren einer verdächtigen Person zu erfassen und auszuwerten, um so die verdächtige Person bzw. das von ihr benutzte Mobiltelefon identifizieren und die geführten Gespräche aufzeichnen und auswerten zu können.

Aus dem Stand der Technik sind verschiedene Mobilfunknetze zur Datenübertragung bekannt. Sehr weit verbreitet sowohl bezüglich der Netzabdeckung als auch bezüglich der Anzahl der im Einsatz befindlichen mobilen Endgeräte sind GSM (Global System for Mobile communications)-Mobilfunknetze. Seit einigen Jahren erhältlich und zunehmend weiter verbreitet sind UMTS (Universal Mobile Telecommunications System)-Mobilfunknetze. Diese beiden Standards unterscheiden sich bspw. hinsichtlich der Authentifizierung, des Integritätsschutzes und der Verschlüsselung. Während sich bei GSM lediglich das mobile Endgerät gegenüber einer Basisstation authentifizieren muss, ist bei UMTS auch eine Authentifizierung der Basisstation bei den mobilen Endgeräten vorgesehen. Im Rahmen des Integritätsschutzes bei UMTS werden die über das Mobilfunknetz zu übertragenden Steuerungsdaten bspw. durch Signieren gegen Fälschung geschützt. Zur Verschlüsselung der über das Mobilfunknetz zu übertragenden Daten werden bei UMTS besondere Verschlüsselungsverfahren eingesetzt, wie bspw. das Kazumi-Verfahren. Die Verschlüsselung betrifft bei UMTS sowohl die Nutzdaten als auch die Steuerungsdaten. Während in einem GSM-Mobilfunknetz zur Datenübertragung eine Kombination aus Frequenzmultiplexverfahren (FDMA - Frequency Divisional Multiple Access) und Zeitmultiplexverfahren (TDMA - Time Divisional Multiple Access) eingesetzt wird, findet in einem UMTS Mobilfunknetz ein Codemultiplexverfahren (CDMA - Code Divisional Multiple Access) Verwendung, bei dem die Daten (Signale) mehrerer Quellen oder Sender gleichzeitig auf derselben Frequenz übertragen werden. Dabei werden den Daten bestimmte Codemuster (sog. Scrambling Codes) zugewiesen.

Des weiteren ist bspw. aus der DE 199 20 222 A1 ein Verfahren zum Identifizieren und Abhören eines mobilen Endgeräts in einem digitalen zellulären GSM-Mobilfunknetz bekannt. Aufgrund der oben beispielhaft und nicht vollständig angeführten Unterschiede zwischen einem GSM-Mobilfunknetz und einem Mobilfunknetz, in dem Daten nach einem Codemultiplexverfahren übertragen werden, wie bspw. einem UMTS-Mobilfunknetz, können die für GSM-Netze bekannten Verfahren nicht einfach auf UMTS-Netze übertragen werden.

Aus der Technical Specification ETSI 3GPP TS 33 108 Version 6.8.2 Release 6 vom Januar 2005 sind ganz allgemein die technischen Voraussetzungen eines UMTS-Mobilfunknetzes für die sogenannte "lawful interception" definiert. Die "lawful interception" ist der Fachausdruck für ein Leistungsmerkmal, das alle technischen Einrichtungen öffentlicher Kommunikationsnetze bieten müssen. Die "lawful interception" betrifft die Möglichkeit, dass sich befugte staatliche Stellen wahlfrei auf bestimmte Kommunikationsverbindungen aufschalten und den dort laufenden Kommunikationsverkehr abhören können müssen. So müssen bspw. Vermittlungsstellen von Mobilfunknetzen derart ausgestaltet sein, dass sie dies ermöglichen. Die Technical Specification betrifft also die besondere Ausgestaltung von Basisstation (Base Station; NodeB), Funknetzwerk-Steuereinrichtung (Radio Network Controller; RNC) bis hin zum Kernnetz (Core Net), nicht jedoch der Luftschnittstelle eines UMTS-Kommunikationsnetzwerks. Wären die dort beschriebenen Voraussetzungen bei einem UMTS-Mobilfunknetz nicht erfüllt, wäre das Abhören von mobilen Endgeräten im Bereich des NodeB, RNC und CoreNet aufgrund fehlender technischer Voraussetzungen von vornherein ausgeschlossen.

In der WO 2005/011 318 A1 ist beschrieben, wie ein zum Zwecke des Abhörens eines mobilen Endgeräts in eine GSM-Funkzelle eingebrachter Simulator, der als virtuelle Basisstation betrieben wird, nur die Anmeldung des abzuhörenden Endgeräts akzeptieren und die Anmeldung anderer Endgeräte zurückweisen kann. Ziel ist es dabei, die Belastung der virtuellen Basisstation durch andere Endgeräte während des Abhörens des abzuhörenden Endgeräts zu verringern. Zu diesem Zweck ist die virtuelle Basisstation in der Lage, Abweisungssignale an Endgeräte zu versenden, die versuchen sich bei der virtuellen Basisstation anzumelden.

Die WO 02/01902 A1 beschreibt das Prinzip des "forced inter-system handover", bei dem das Handover zwischen zwei verschiedenen Netzen vom Kernnetz erzwungen wird, insbesondere wenn die Signalstärke im ersten Netz schwächer ist als im zweiten Netz.

Der vorliegenden Erfindung liegt die Aufgabe zu Grunde, eine Möglichkeit zu schaffen, auf möglichst einfache Weise auf ein Mobiltelefon in einem Mobilfunknetzwerk, in dem Daten nach dem Codemultiplexverfahren übertragen werden, insbesondere in einem UMTS-Mobilfunknetz, erfassend oder manipulativ zuzugreifen, insbesondere die Position des Mobiltelefons anzupeilen oder zu orten und/oder über das Mobiltelefon geführte Gespräche abzuhören.

Zur Lösung dieser Aufgabe wird ausgehend von dem Verfahren der eingangs genannten Art vorgeschlagen, dass das mobile Endgerät im Anschluss an die Identifizierung des mobilen Endgeräts zur Ausführung der erfassenden oder manipulativen Zugriffe in ein anderes Mobilfunknetz abgewiesen wird, in dem Daten nach einem zweiten Protokoll übertragen werden.

Erfindungsgemäß wird also vorgeschlagen, dass die Identifizierung des mobilen Endgeräts im Umfeld des ersten Protokolls, insbesondere in einem UMTS-Umfeld, erfolgt. Das ist erforderlich, da hinsichtlich Authentifizierung, des Integritätsschutzes und der Verschlüsselung den UMTSspezifischen Sicherheitsmechanismen Rechnung getragen werden muss, die eine Identifizierung der bei Basisstationen des UMTS-Netwerks angemeldeten Endgeräte deutlich erschweren. Zur Identifizierung des mobilen Endgeräts wird also ein speziell auf das UMTS-Umfeld abgestimmtes Verfahren eingesetzt. Nach erfolgter Identifikation kann das Endgerät dann in ein alternatives Mobilfunknetz, bspw. ein GSM-Netz, abgewiesen werden. Das hat den Vorteil, dass die erfassenden oder manipulativen Zugriffe auf das Mobiltelefon mittels an sich bekannter Verfahren und Vorrichtungen durchgeführt werden können. Das hat den Vorteil, dass zum Abhören von Mobiltelefonen neuer Generation, die bspw. im UMTS-Umfeld betrieben werden, die bisher in älteren Mobilfunknetzen, bspw. im GSM-Umfeld, verwendeten Geräte zum Abhören, Anpeilen oder Orten des Mobilfunkgeräts weiter benutzt werden können. Es müssen keine neuen Geräte angeschafft werden, das Personal muss nicht neu geschult werden, etc. Entsprechende Verfahren und Vorrichtung für das Abhören von Mobiltelefonen in einem GSM-Umfeld sind bspw. aus der DE 199 20 222 A1 bekannt.

Ein wichtiger Aspekt der vorliegenden Erfindung besteht also darin, die Identifizierung eines mobilen Endgeräts im Umfeld eines ersten Datenübertragungsprotokolls auszuführen und das identifizierte Endgerät dann für die eigentlichen erfassenden oder manipulativen Zugriffe in das Umfeld eines alternativen Datenübertragungsprotokolls abzuweisen. Unabhängig von den in der Technical Specification ETSI 3GPP TS 33 108 Version 6.8.2 Release 6 beschriebenen legalen Zugangsmöglichkeiten bietet das erfindungsgemäß vorgeschlagene Verfahren die technische Möglichkeit einer "lawful interception" an einer Uu-Luftschnittstelle.

Vorzugsweise werden für die Datenübertragung relevante Parameter von Basisstationen des Mobilfunknetzes in räumlicher Nähe zum Simulator ermittelt und zum Identifizieren des Endgeräts herangezogen. Der Simulator ist dabei in räumlicher Nähe zu dem zu identifizierenden Endgerät, d.h. in der Funkzelle, in der das Endgerät eingebucht ist, oder in einer benachbarten Funkzelle angeordnet. Die ermittelten Parameter umfassen insbesondere die von den in räumlicher Nähe zu dem Simulator angeordneten Basisstationen verwendeten Scrambling Codes und/oder die Sendestärken der Basisstationen. Der Scrambling Code ist ein Codemuster, mit dem die verschiedenen Sender im Rahmen des Codemultiplexverfahrens zur Datenübertragung codiert werden. Dann wird der Simulator als neue Basisstation betrieben, entweder mit einem anderen Location Area Code als die ursprüngliche Basisstation, bei der das zu identifizierende Endgerät ursprünglich eingebucht ist, oder mit dem gleichen Location Area Code. Zu diesem Zweck verfügt der Simulator über geeignete Mittel, bspw. eine Basisstation, welche einen Betrieb des Simulators als Basisstation in dem Mobilfunknetz unter Verwendung des ersten Protokolls ermöglichen.

Außerdem sendet der Simulator Systeminförmationen zwar in dem gleichen Frequenzband wie die ursprüngliche Basisstation, vorzugsweise jedoch mit einer höheren Sendeleistung als die ursprüngliche Basisstation. Durch Aussendung eines anderen Location Area Codes (LAC) wird dem zu identifizierenden Endgerät eine Bewegung des Endgeräts in einen neuen räumlichen Bereich, dem der andere LAC zugeordnet ist, vorgetäuscht. Dadurch wird das Endgerät zur automatischen Anmeldung bei dem Simulator gezwungen. Zu diesem Zweck führt das Endgerät einen sogenannten Location Update aus. Da sich das Endgerät üblicherweise bei derjenigen Basisstation anmeldet, deren Signale es am stärksten empfängt, kann ein automatisches Anmelden des Endgeräts auch dadurch erreicht werden, dass die simulierte Basisstation des Simulators mit dem gleichen LAC, jedoch mit einer viel höheren Sendeleistung als die Basisstation des Mobilfunknetzes sendet.

Anhand der Identifikationsparameter kann dann eine Identifikation des Endgeräts erfolgen. Die Identifikationsparameter umfassen bspw. eine IMSI (International Mobile Subscriber Identity), eine TMSI (Temporary Mobile Subscriber Identity), P-TMSI (Packet TMSI) und/oder eine TMEI (International Mobile Equipment Identity). Diese Identifikationsparameter reichen aus, um ausgehend von dem Simulator zu dem identifizierten Endgerät eine Verbindung zum Zwecke des Abhörens von über das Endgerät geführten eingehenden oder abgehenden Gesprächen aufzubauen. Zu diesem Zweck verfügt der Simulator über geeignete Mittel, bspw. ein Endgerät, welche einen Betrieb des Simulators als Endgerät zum Verbindungsaufbau zu dem identifizierten Endgerät und zum Überwachen der Verbindung bzw. des Gesprächs erlauben.

Gemäß einer bevorzugten Ausführungsform der Erfindung ist das Messsystem als ein Monitor-Endgerät, das Teil des Simulators sein kann, ausgebildet. Da Endgeräte sowieso die für die Datenübertragung relevanten Parameter von Basisstationen des Mobilfunknetzes in räumlicher Nähe zum Endgerät ermitteln, können sie problemlos als Messsystem im Sinne der Erfindung eingesetzt werden.

Der eigentliche Name und die persönlichen Daten des Benutzers des Endgeräts sind beim Betreiber (sog. Provider) des Mobilfunknetzes abgelegt und können von dort beispielsweise im Rahmen einer Behördenanfrage erfragt werden. Nur beim Provider sind Cross-Reference-Listen verfügbar, die eine Zuordnung der IMSI zu einem Benutzer bzw. der IMSI zu einer Rufnummer ermöglichen. Die TMSI ist - wie der Name schon sagt - lediglich temporärer Natur und erlaubt keine eindeutige Zuordnung zu einem bestimmten Benutzer oder einer bestimmten Rufnummer. Aus diesem Grund ist es wichtig, dass die IMSI und nicht nur die TMSI zur Verfügung steht.

Falls das zu identifizierende Endgerät beim Anmelden bei dem Simulator lediglich die TMSI (Temporary Mobile Subscriber Identity) als Identifikationsparameter übermittelt dann kann eine Authentifizierungsprozedur gestartet werden. Falls das zu identifizierende Endgerät jedoch eine Authentifizierungsprozedur erwartet, wird gemäß einer vorteilhaften Weiterbildung der Erfindung vorgeschlagen, dass im Anschluss an die Anmeldung des Endgeräts bei dem Simulator
- eine Authentifizierungsprozedur gestartet wird;
- das zu identifizierende Endgerät die Authentifizierungsprozedur als fehlerhaft abweist;
- von dem Simulator nochmals eine Identifizierungsprozedur gestartet wird, in deren Verlauf der Simulator das zu identifizierende Endgerät nach seiner IMSI (International Mobile Subscriber Identity) und/oder IMEI (International Mobile Equipment Identity) fragt; und
- der Simulator die IMSI und/oder die IMEI des zu identifizierenden Endgeräts empfängt.

Gemäß dieser Weiterbildung wird zunächst eine Authentisierungsprozedur gestartet. Da sich jedoch der Simulator bzw. die neue Basisstation als Teil des Simulators nicht ausweisen kann (was in UMTS-Netzen jedoch erforderlich ist), weist das zu identifizierende Endgerät die Authentifizierungsprozedur als fehlerhaft ab, bspw. aufgrund eines MAC-Fehlers. Nun startet der Simulator eine Identifizierungsprozedur, wodurch dem zu identifizierenden Endgerät der Eindruck vorgetäuscht wird, die neue Basisstation (die tatsächlich Teil des Simulators ist) benötige zu Identifikationszwecken die Identifikationsparameter (IMSI oder IMEI) des zu identifizierenden Endgeräts. Daraufhin übermittelt das Endgerät seine IMSI oder IMEI an den Simulator, anhand der eine eindeutige Identifikation des Endgeräts möglich ist.

Das zu identifizierende Endgerät wird nach dem Zurückweisen des Anmeldeversuchs in dem ersten Mobilfunknetz (z.B. UMTS) zur automatischen Anmeldung bei einer Basisstation des alternativen Mobilfunknetzes (z.B. GSM) gezwungen. Die über das identifizierte Endgerät und die GSM-Funkzelle geführten Telefongespräche werden vorzugsweise mit Hilfe herkömmlicher Abhörverfahren für GSM-Mobilfunknetze abgehört.

Nach erfolgter Identifikation des Endgeräts wird das Endgerät also in ein herkömmliches GSM-Mobilfunknetz verwiesen. Dies kann bspw. durch definierte Informationselemente (IE), durch Stören (sog. Jammen) der UMTS-Verbindung oder auf andere geeignete Weise erfolgen. Bei einer Unterbrechung oder durch Stören der UMTS-Verbindung, wird das Endgerät aufgrund des zur Datenübertragung in dem Mobilfunknetz verwendeten Protokolls zum Verbindungsaufbau über ein alternatives Mobilfunknetz, insbesondere über das GSM-Netz veranlasst. Dies geschieht bspw. im Rahmen einer sog. "Cell Reselection" Prozedur.

Nach dem Aufbau der Verbindung zu dem GSM-Netz, erfolgt die gesamte Gesprächsabwicklung in dem Endgerät dann in herkömmlicher Weise nach dem GSM-Standard. Zum Abhören der Gespräche können herkömmliche Verfahren eingesetzt werden, wie sie bspw. aus der DE 199 20 222 A1 bekannt sind. Bezüglich der bekannten Verfahren zum Abhören eines Endgeräts in einem GSM-Netz wird ausdrücklich auf diese Druckschrift verwiesen.

Es wird insbesondere vorgeschlagen, dass im Anschluss an die Identifikation des Endgeräts
- mittels eines Monitor-Endgeräts die ermittelten Identitätsparameter und die Sicherheitsfähigkeiten (security capabilities) des identifizierten Endgeräts an eine reale Basisstation des Mobilfunknetzes übermittelt werden;
- die reale Basisstation RAND (Zufallszahl) und AUTN (Authentifizierungstoken) an das Monitor-Endgerät zurücksendet;
- der Simulator die Verbindung zu der realen Basisstation des Mobilfunknetzes abbricht;
- der Simulator als eine andere Basisstation einer anderen Funkzelle eines GSM-Mobilfunknetzes betrieben wird und eine Verbindung zu dem identifizierten Endgerät aufbaut;
- eine Authentifizierungsprozedur zwischen dem identifizierten Endgerät und dem Simulator gestartet wird; und
- falls die Authentifizierungsprozedur erfolgreich beendet wird, der Simulator das identifizierte Endgerät veranlasst, keine Verschlüsselung bei der nachfolgenden Datenübertragung anzuwenden.

Der Simulator baut nach dem Abbruch der Verbindung zu der realen Basisstation des Mobilfunknetzes die andere Verbindung zu dem identifizierten Endgerät über eine Basisstation einer GSM (Global System for Mobile Communication)-Funkzelle auf.

Das Monitor-Endgerät ist vorzugsweise Teil des Simulators. Bei den Zahlengruppen RAND und AUTN, die der Simulator von einer realen Basisstation des Mobilfunknetzes erhält, handelt es sich um Parameter, die in UMTS zur Authentifizierung einer Basisstation gegenüber einem Endgerät benötigt werden. Das Monitor-Endgerät täuscht der realen Basisstation also einen Verbindungswunsch vor und veranlasst die reale Basisstation somit, RAND und AUTN an den Simulator zu übermitteln. Aus Sicht der realen Basisstation handelt es sich bei dem Simulator um ein reales Endgerät. Erst mit Hilfe der Parameter RAND und AUTN ist es überhaupt möglich, eine Gesprächsverbindung zwischen einer Basisstation und einem identifizierten abzuhörenden Endgerät aufzubauen.

Der Verbindungsaufbau zu dem abzuhörenden Endgerät erfolgt dann anhand einer simulierten GSM-Basisstation einer GSM-Funkzelle eines GSM-Mobilfunknetzes. Die simulierte GSM-Basisstation ist vorzugsweise Teil des Simulators. Nach erfolgter Authentifizierung sendet die simulierte GSM-Basisstation Sicherheitsparameter an das abzuhörende Endgerät. Die Sicherheitsparameter umfassen unter anderem einen Befehl an das Endgerät, ohne Verschlüsselung zu arbeiten (sog. "No Encryption"-Parameter), d.h. Daten unverschlüsselt zu übertragen.

Das vorgeschlagene Konzept arbeitet mit zwei unterschiedlichen Mobilfunknetzen, nämlich mit UMTS- und GSM-Netzen. Aus diesem Grund muss das abzuhörende Endgerät ein Multi-Radio-Mode-Endgerät sein, das mehrere unterschiedliche Mobilfunknetze, nämlich UMTS- und GSM-Netze, unterstützt. Das Konzept umfasst eine simulierte GSM-Basisstation, eine simulierte UMTS-Basisstation, und ein Monitor-Endgerät. Die Verzögerungszeiten zwischen dem Zugriff auf die Authentifizierungsparameter und der Unterdrückung der Verschlüsselung sollte möglichst kurz sein, um zu verhindern, dass von dem realen UMTS-Netz neue RAND und AUTN vor der Unterdrückung der Verschlüsselung erzeugt werden. Die Verzögerungszeiten sollten im Bereich von wenigen Sekunden, maximal im Minutenbereich liegen.

Als eine weitere Lösung der Aufgabe der vorliegenden Erfindung wird ausgehend von dem Simulator zur Ausführung erfassender oder manipulativer Zugriffe auf ein mobiles Endgerät der eingangs genannten Art vorgeschlagen, dass
- der Simulator Mittel zum Abweisen des im Umfeld des ersten Protokolls identifizierten Endgeräts zu einem alternativen digitalen zellulären Mobilfunknetz, in dem Daten nach einem von dem ersten Protokoll abweichenden zweiten Protokoll übertragen werden, aufweist;
- der Simulator Mittel (z.B. eine simulierte Basisstation, eine BSC-Funktionalität und/oder einen Steuer-und Bedienrechner) zum Betreiben des Simulators als eine neue Basisstation des alternativen Mobilfunknetzes, in dem Daten nach dem zweiten Protokoll übertragen werden, aufweist; und
- der Simulator Mittel (z.B. die simulierte Basisstation, die BSC-Funktionalität und/oder der Steuer-und Bedienrechner) zur Ausführung der erfassenden oder manipulativen Zugriffe auf das identifizierte mobile Endgerät in dem alternativen Mobilfunknetz, in dem Daten nach dem zweiten Protokoll übertragen werden, aufweist.

Vorteilhafterweise umfasst das Messsystem ein Monitor-Endgerät für das digitale zelluläre Mobilfunknetz, in dem Daten nach einem ersten Protokoll übertragen werden.

Gemäß einer vorteilhaften Weiterbildung der Erfindung wird vorgeschlagen, dass die Mittel zum Abweisen des im Umfeld des ersten Protokolls identifizierten Endgeräts zu dem alternativen Mobilfunknetz einen Anmeldeversuch des identifizierten Endgeräts bei dem Simulator abweisen oder dass die Mittel die Verbindung zwischen dem Endgerät und der neuen Basisstation unterbrechen und/oder auf andere Weise stören und der Simulator das Endgerät dadurch (aufgrund standardisierter UMTS-Protokolle) zur automatischen Anmeldung bei einer anderen Basisstation einer anderen Funkzelle des alternativen Mobilfunknetzes, in dem Daten nach dem zweiten Protokoll übertragen werden, zwingt.

Ein bevorzugtes Ausführungsbeispiel der Erfindung wird nachfolgend anhand der Figuren näher erläutert. Es zeigen:
- Figur 1: ein erfindungsgemäßer Simulator zum Identifizieren eines mobilen Endgeräts in einem digitalen zellulären Mobilfunknetz gemäß einer bevorzugten Ausführungsform;
- Figur 2: eine Abbildung von UMTS-Funkzellen mit unterschiedlichen Location Area Codes;
- Figur 3: ein Ablaufdiagramm eines erfindungsgemäßen Verfahrens zur Identifikation eines Endgeräts gemäß einer ersten Ausführungsform;
- Figur 4: ein Ablaufdiagramm eines erfindungsgemäßen Verfahrens zur Identifikation eines Endgeräts gemäß einer zweiten Ausführungsform; und
- Figur 5: ein Ablaufdiagramm eines erfindungsgemäßen Verfahrens zum Abhören eines Endgeräts gemäß einer bevorzugten Ausführungsform.

Sicherheitskräften obliegen unter anderem die Aufgaben, bereits begangene Verbrechen aufzuklären bzw. noch nicht begangene Verbrechen abzuwehren. Ein wichtiger Aspekt bei der Erfüllung dieser Aufgaben ist die Möglichkeit, in begründeten Ausnahmefällen eine verdächtige Person anhand eines von ihr benutzten Mobiltelefons identifizieren und von der Person über das Mobiltelefon geführte Telefongespräche abhören, aufzeichnen und auswerten zu können.

Es gibt verschiedene Mobilfunknetze zur Datenübertragung. Sehr weit verbreitet sowohl bezüglich der Netzabdeckung als auch bezüglich der Anzahl der im Einsatz befindlichen mobilen Endgeräte sind GSM (Global System for Mobile Communications)-Mobilfunknetze. Seit einigen Jahren verfügbar und zunehmend verbreitet sind UMTS (Universal Mobile Telecommunications System)-Mobilfunknetze. Diese beiden Standards unterscheiden sich bspw. hinsichtlich der Authentifizierung, des Integritätsschutzes und der Verschlüsselung. Ein weiterer Unterschied besteht darin, dass in UMTS ein so genanntes Code Division Multiple Access-Verfahren (CDMA) eingesetzt wird, während GSM auf eine Kombination von Frequency Division Multiple Access-und Time Division Multiple Access-Verfahren (FDMA/TDMA) zurückgreift. Aufgrund dieser markanten Unterschiede können in GSM-Netzen eingesetzte Verfahren und Vorrichtungen zum Identifizieren und Abhören eines mobilen Endgeräts nicht auf UMTS-Netze übertragen werden.

Die vorliegende Erfindung schlägt erstmals ein Verfahren vor, mit dem auch in UMTS-Mobilfunknetzen vor Ort Endgeräte von verdächtigen Personen identifiziert und gegebenenfalls abgehört werden können.

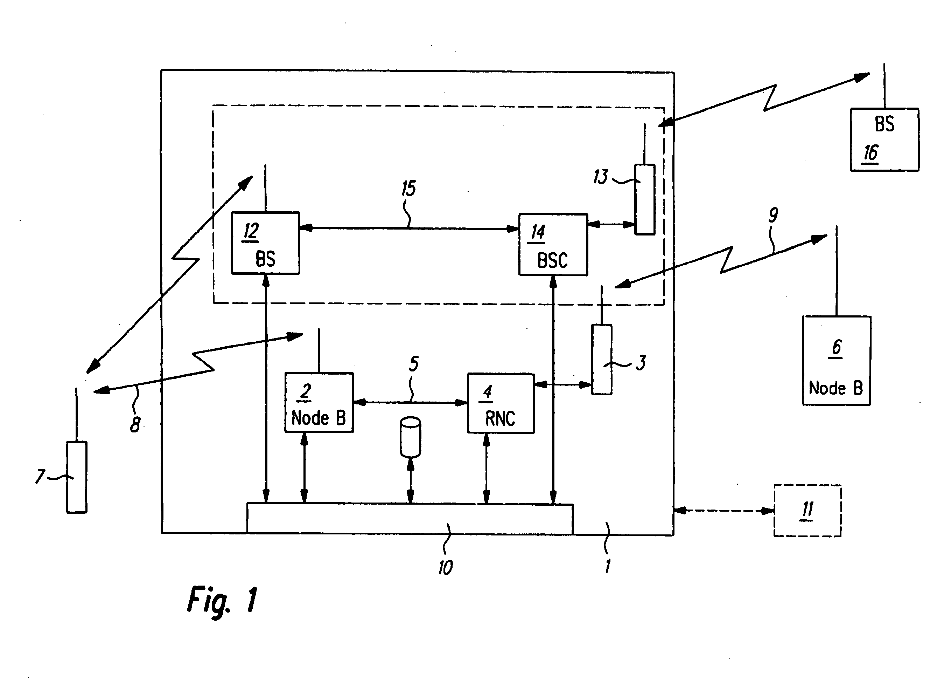

In Figur 1 ist eine Vorrichtung zur Ausführung des erfindungsgemäßen Verfahrens, eine erfindungsgemäße Vorrichtung, ein sog. UTRAN (UMTS Terrestrial Radio Access Network)-Simulator, in ihrer Gesamtheit mit dem Bezugszeichen 1 bezeichnet. Der Simulator 1 umfasst eine simulierte UMTS-Basisstation 2, die als NodeB bezeichnet wird, und ein simuliertes Monitor-Endgerät 3, das nach dem UMTS-Standard arbeitet und als Monitor-UE (User Equipment) bezeichnet wird. Außerdem umfasst der Simulator 1 eine RNC (Radio Network Controller)-Funktionalität 4. Zwischen dem simulierten NodeB 2 und der RNC-Funktionalität 4 ist eine sog. Iub-Schnittstelle 5 vorgesehen. Außerdem ist ein Steuer- und Bedienrechner 10 vorgesehen, welcher den Ablauf des erfindungsgemäßen Verfahrens steuert.

Darüber hinaus umfasst der Simulator 1 eine simulierte GSM-Basisstation 12, die als Basestation (BS) bezeichnet wird, und ein simuliertes GSM-Endgerät 13, das nach dem GSM-Standard arbeitet. Das simulierte UMTS-Endgerät 3 und das simulierte GSM-Endgerät 13 können auch zu einer Einheit zusammengefasst sein. Das ist ohne weiteres möglich, da UMTS-Endgeräte üblicherweise sowieso eine GSM-Funktionalität aufweisen, um eine sichere und zuverlässige Gesprächsverbindung auch in Gebieten mit nur unzureichender UMTS-Abdeckung sicherstellen zu können. Außerdem weist der Simulator 1 eine BSC (Base Station Controller)-Funktionalität 14. auf. Zwischen der simulierten BS 12 und der BSC-Funktionalität 14 ist eine Schnittstelle 15 vorgesehen.

Des weiteren ist ein externes Messsystem 11 vorgesehen, das die für UMTS relevanten Parameter der den Simulator 1 umgebenden Basisstationen misst. Selbstverständlich kann das Messsystem 11 auch in den Simulator 1 integriert sein. Als Messsystem 11 wird vorzugsweise das UMTS-Monitor-Endgerät 3 genutzt, sodass kein zusätzliches Messsystem mehr erforderlich ist. Das Messsystem 3 bzw. 11 erstellt einen Überblick über das zelluläre UMTS-Umfeld, der dann an den UTRAN-Simulator 1 übermittelt wird.

Der Simulator 1 wird zur Realisierung des Verfahrens in eine reale UMTS-Umgebung eingebracht, welche eine reale Basisstation (NodeB) 6 und ein reales Endgerät (UE) 7 umfasst. Selbstverständlich kann die UMTS-Umgebung mehr Basisstationen als die dargestellte Basisstation 6 und mehr Endgeräte als das dargestellte Endgerät 7 umfassen. Das Endgerät 7 ist das zu identifizierende und ggf. abzuhörende Endgerät und wird auch als Target-UE bezeichnet. Ein beliebiges UMTS-Endgerät wird gemäß der hier verwendeten Terminologie zu einem Target-UE 7, wenn es sich im UTRAN-Simulator 1 mit seinen individuellen Parametern ( z.B. IMSI und/oder IMEI) angemeldet hat. Zwischen dem realen Endgerät 7 und dem simulierten NodeB 2 ist eine Uu-Luftschnittstelle 8 vorgesehen. Zwischen dem simulierten Endgerät 3 und dem realen NodeB 6 ist eine weitere Luftschnittstelle 9 vorgesehen.

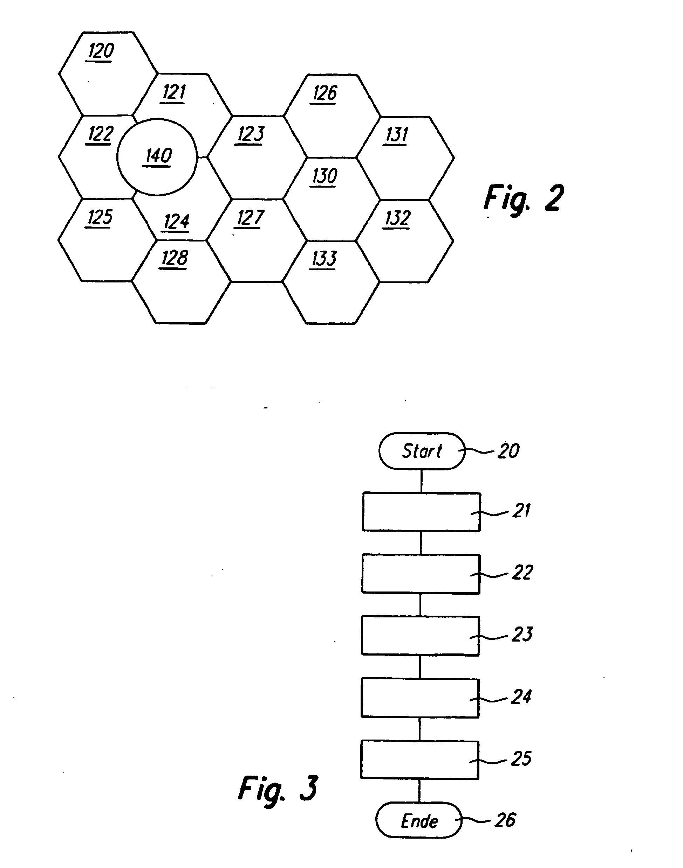

In Figur 2 ist ein zelluläres UMTS-Mobilfunknetz dargestellt, das eine Vielzahl von Funkzellen 120-128, 130-133 umfasst. Einige der Funkzellen 120-128 gehören zu einer ersten sog. Location Area, wobei allen Funkzellen 120-128 der gleiche Location Area Code (LAC) zugeordnet ist (z.B. LAC=1000). Andere Funkzellen 130-133 gehören zu einer zweiten Location Area, wobei allen Funkzellen 130-133 der gleiche Location Area Code zugeordnet ist (z.B. LAC=2000), der sich von dem ersten Location Area Code unterscheidet. Basisstationen (NodeBs) decken eine oder mehrere der Funkzellen 120-128, 130-133 ab. Die Basisstationen sind jedoch der besseren Übersichtlichkeit wegen in Figur 2 nicht dargestellt.

In Figur 3 ist ein Ablaufdiagramm des erfindungsgemäßen Verfahrens zur Identifikation des Endgeräts 7 dargestellt. Das Verfahren beginnt in einem Funktionsblock 20. Der Simulator 1 wird in der räumlichen Nähe zu dem zu identifizierenden UMTS-Endgerät 7 in dem UMTS-Netz angeordnet (Funktionsblock 21). Der UTRAN-Simulator 1 wird in einer der geographischen Funkzellen 120-128, 130-133 betrieben, in deren Basisstation das zu identifizierende Endgerät 7 eingebucht ist. Möglicherweise ist das Endgerät 7 zusammen mit anderen Endgeräten in der Basisstation eingebucht. Mit dem Messsystem 3; 11 werden in einem Funktionsblock 22 die für UMTS relevanten Parameter der den Simulator 1 umgebenden Basisstationen gemessen bzw. auf andere Weise erfasst und an den Simulator 1 übergeben. Diese Parameter umfassen bspw. sog. Scrambling Codes der Funkzellen 120-128, 130-133, die Sendeleistungen der Basisstationen, Identitätsparameter der NodeBs und Systeminformationen.

In einem Funktionsblock 23 sendet der UTRAN-Simulator 1 seinerseits Systeminformationen in dem gleichen Frequenzband, wie die benachbarten Basisstationen, jedoch mit einer höheren Sendeleistung, so dass die in der räumlichen Nähe zu dem Simulator 1 angeordneten Endgeräte (und damit auch das zu identifizierende Endgerät 7) den Simulator 1 als neue (simulierte) Basisstation erkennen. Außerdem sendet der Simulator 1 mit einer anderen Location Area Code (z.B. LAC=3000), damit die in der räumlichen Nähe zu dem Simulator 1 angeordneten Endgeräte (und damit auch das zu identifizierende Endgerät 7) den Eindruck bekommen, sie hätten sich räumlich in einen neuen Bereich mit einem neuen LAC, also in ein neues Location Area bewegt. Der LAC der simulierten Basisstation 2 ist derart gewählt, dass er von den regulären Basisstationen 6 in der Umgebung des Simulators 1 nicht verwendet wird.

Dadurch wird in diesen Endgeräten (und damit auch in dem zu identifizierenden Endgerät 7) eine sog. Location Update Prozedur initiiert, in deren Rahmen sich die Endgeräte mit ihren Identifikationsparametern bei der simulierten Basisstation 2 anmelden (Funktionsblock 24). Die Identifikationsparameter umfassen bspw. eine IMSI (International Mobile Subscriber Identity), eine TMSI (Temporary Mobile Subscriber Identity) und/oder eine IMEI (International Mobile Equipment Identity). Anhand dieser Identifikationsparameter erfolgt dann in einem Funktionsblock 25 eine Identifikation des Endgeräts 7. In einem Funktionsblock 26 ist das Verfahren zur Identifikation des Endgeräts 7 beendet. Der simulierte räumliche Bereich mit einer neuen LAC ist in Figur 2 mit dem Bezugszeichen 140 bezeichnet.

Der eigentliche Name und die persönlichen Daten des Benutzers des Endgeräts 7 sind beim Betreiber (sog. Provider) des Mobilfunknetzes abgelegt und können von dort bspw. im Rahmen einer Behördenanfrage oder auf anderem Wege erfragt werden. Nur beim Provider sind sog. Cross-Reference-Listen verfügbar, die eine Zuordnung der IMSI zu einem Benutzer bzw. der IMSI zu einer Rufnummer ermöglichen. Die TMSI ist - wie der Name schon sagt - lediglich temporärer Natur und erlaubt keine eindeutige Zuordnung zu einem bestimmten Benutzer oder einer bestimmten Rufnummer. Aus diesem Grund ist es wichtig, dass die IMSI oder die IMEI und nicht nur die TMSI zur Verfügung steht.

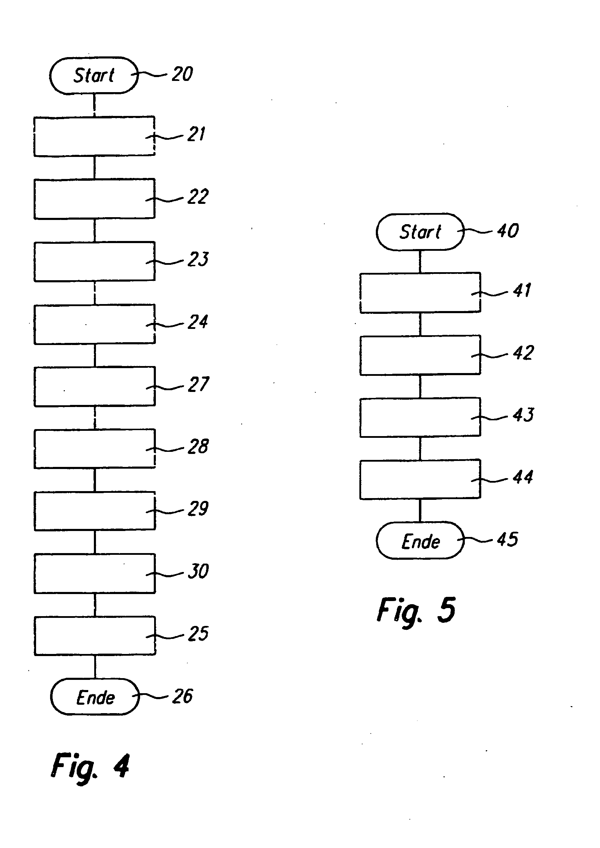

Falls das zu identifizierende Endgerät 7 beim Anmelden bei dem Simulator 1 in Funktionsblock 24 lediglich die TMSI (Temporary Mobile Subscriber Identity) als Identifikationsparameter übermittelt und eine Authentifizierungsprozedur erwartet, kann die Erfindung gemäß dem Ablaufdiagramm aus Figur 4 dahingehend ergänzt werden, dass im Anschluss an die Anmeldung des Endgeräts 7 bei dem Simulator 1 in einem Funktionsblock 27 die Authentisierungsprozedur gestartet wird. Da sich jedoch der Simulator 1 bzw. die simulierte Basisstation 2 als Teil des Simulators 1 gegenüber dem Endgerät 7 nicht ausweisen kann (was in UMTS-Netzen jedoch erforderlich ist), weist das zu identifizierende Endgerät 7 in einem Funktionsblock 28 die Authentifizierungsprozedur als fehlerhaft ab, bspw. aufgrund eines MAC-Fehlers. Nun startet der Simulator 1 in einem Funktionsblock 29 seinerseits eine Identifizierungsprozedur, wodurch dem zu identifizierenden Endgerät der Eindruck 7 vorgetäuscht wird, die simulierte Basisstation 2 benötige zu Identifikationszwecken die IMSI des zu identifizierenden Endgeräts 7. Daraufhin übermittelt das Endgerät 7 in einem Funktionsblock 30 seine IMSI an den Simulator 1, anhand der in dem Funktionsblock 25 eine eindeutige Identifikation des Endgeräts 7 möglich ist. In dem Funktionsblock 26 ist das Verfahren beendet.

Im Anschluss an die Identifikation des Target-Endgeräts 7 gemäß den Verfahren nach Figur 3 und Figur 4 können über das Endgerät 7 geführte eingehende oder abgehende Gespräche auf verschiedene Weise abgehört werden. Gemäß einer ersten Ausführungsform, deren Ablaufdiagramm in Figur 5 dargestellt ist, beginnt das Verfahren zum Abhören des Endgeräts 7 in einem Funktionsblock 40. In einem Funktionsblock 41 findet die Identifikation des Endgeräts 7 statt. Der Block 41 umfasst somit sämtliche Verfahrensschritte 20 bis 26 der Figur 3 bzw. 20 bis 30 der Figur 4. Anschließend wird in einem Funktionsblock 42 die Location Update Prozedur des Endgeräts 7 von dem Simulator 1 bzw. der simulierten Basisstation 2 zurückgewiesen.

Daraufhin meldet sich das Endgerät 7 in einem Funktionsblock 43 nach einer sog. Cell Reselection Prozedur über die simulierte GSM-Basisstation 12 in einer GSM-Funkzelle eines GSM-Netzes an. UMTS-Endgeräte müssen laut Standard in der Lage sein, auch im GSM-Netz betrieben werden zu können. Die Abweisung eines Target-Endgerätes 7 vom UMTS-Netz in das GSM-Netz kann auf beliebige Weise erfolgen. So kann die Abweisung bspw. durch ein Kommando (eine festgelegte Information) erfolgen, das über den sog.

BCCH (Broadcast Control Channel) ausgesendet wird. Alternativ kann die Abweisung auch über eine beliebige Nachricht erfolgen, die über den sog. FACH (Forward Access Channel) oder den sog. DCCH (Dedicated Control Channel) gesendet werden kann. Die in der Zelle 140 des UTRAN-Simulators 1 befindlichen UMTS-Endgeräte erhalten dieses Kommando (diese Information) und buchen sich in einem vorhandenen GSM-Netz ein. Es ist auch denkbar, die Verbindung zu dem UMTS-Netz auf andere Weise, bspw. durch Stören (sog. Jammen) zu beeinträchtigen und letzten Endes zu beenden.

Sämtliche über das Target-Endgerät 7 eingehende oder abgehende Gespräche werden nun nicht über das UMTS-Netzwerk, sondern über das GSM-Netzwerk geführt. Genauer gesagt, werden die Gespräche über die simulierte GSM-Basisstation 12, das simulierte GSM-Endgerät 13 und weiter zu einer realen GSM-Basisstation 16 geführt. In einem Funktionsblock 44 können dann die über das Target-Endgerät 7 in dem GSM-Umfeld geführten Gespräche mit herkömmlichen Verfahren, wie sie bspw. aus der DE 199 20 222 A1 bekannt sind, abgehört werden. In einem Funktionsblock 45 ist das Verfahren dann beendet.

Die erfassenden und manipulativen Zugriffe auf das mobile Endgerät 7 können auch eine Übertragung von Informationen bezüglich des Endgeräts 7 an den Simulator 1 umfassen. Im Rahmen der Informationsübertragung können bspw. Informationen bezüglich der aktuellen Position des Endgeräts übermittelt werden. Das erlaubt eine besonders genaue Ortung des mobilen Endgeräts, insbesondere im innerstädtischen Bereich und/oder in Gebäuden. Alternativ oder zusätzlich können auch Werte für die Feldstärken übermittelt werden, mit denen das Endgerät Signale von sichtbaren Basisstationen des Mobilfunknetzes empfängt. Es ist auch denkbar, dass das Endgerät 7 über ein satellitenbasiertes Positionserfassungssystem verfügt, das Informationen über die aktuelle Position des Endgeräts 7 ermitteln kann. Diese Positionsinformationen können ebenfalls an den Simulator 1 übertragen werden.

Ebenso ist es gemäß der vorliegenden Erfindung möglich über das Target-Endgerät 7 geführte Gespräche durch einen sog. Quasi-Transparent-Prozess abzuhören. Dazu ist es erforderlich, dass sich der Simulator 1 zunächst Sicherheitsinformationen von der realen UMTS-Basisstation 6 beschafft und dann mit diesen Informationen eine Verbindung von der simulierten GSM-Basisstation 12 zu dem Endgerät 7 aufbaut. Ebenso muss mit Hilfe der zuvor im Rahmen der Identifikation beschafften Identifikationsparameter des Endgeräts 7 eine Verbindung von dem GSM-Endgerät 13 zu der realen GSM-Basisstation 16 aufgebaut werden. Gespräche von oder zu dem Target-Endgerät 7 werden nun nicht direkt zu der realen Basisstation 6 bzw. 16 geführt, sondern lediglich indirekt über den UTRAN-Simulator 1. In dem Simulator 1 können die abgehörten Gespräche ganz oder teilweise aufgezeichnet werden, bspw. für eine spätere Auswertung oder zur Beweissicherung. Des weiteren werden die Gespräche zwangsweise über das GSM-Netzwerk und nicht über das UMTS-Netzwerk geführt, selbst wenn eine ausreichende UMTS-Abdeckung gegeben wäre.

## Patentansprüche

1. Verfahren zur Ausführung erfassender oder manipulativer Zugriffe auf ein mobiles Endgerät (7) in einem digitalen zellulären Mobilfunknetz, in dem Daten nach einem ersten Protokoll übertragen werden, mittels eines in räumlicher Nähe zu dem Endgerät (7) angeordneten Simulators (1), wobei
- das Endgerät (7) identifiziert wird, indem Identifikationsparameter des Endgeräts (7) ermittelt werden, und
- die gesamte Identifizierung im Umfeld des digitalen zellulären Mobilfunknetzes, in dem Daten nach dem ersten Protokoll übertragen werden, erfolgt,
**dadurch gekennzeichnet, dass** das mobile Endgerät (7) im Anschluss an die Identifizierung des mobilen Endgeräts (7) zur Ausführung der erfassenden oder manipulativen Zugriffe in ein anderes Mobilfunknetz abgewiesen wird, in dem Daten nach einem zweiten Protokoll übertragen werden.

2. Verfahren nach Anspruch 1, **dadurch gekennzeichnet, dass** das erste Protokoll ein Universal Mobile Telecommunications System UMTS-Protokoll ist.

3. Verfahren nach Anspruch 1 oder 2, **dadurch gekennzeichnet, dass** das zweite Protokoll ein Global System for Mobile Communications GSM-Protokoll ist.

4. Verfahren nach einem der Ansprüche 1 bis 3, **dadurch gekennzeichnet, dass** die erfassenden oder manipulativen Zugriffe auf das mobile Endgerät (7) ein Anpeilen oder eine Ortung des Endgeräts (7) umfassen.

5. Verfahren nach einem der Ansprüche 1 bis 3, **dadurch gekennzeichnet, dass** die erfassenden oder manipulativen Zugriffe auf das mobile Endgerät (7) ein Abhören von über das Endgerät (7) geführten Gesprächen umfassen.

6. Verfahren nach einem der Ansprüche 1 bis 5, **dadurch gekennzeichnet, dass** zum Identifizieren des mobilen Endgeräts (7) in dem digitalen zellulären Mobilfunknetz, in dem Daten nach dem ersten Protokoll übertragen werden, im Umfeld des ersten Protokolls die nachfolgenden Schritte ausgeführt werden:
- von einem Messsystem (11) werden die für die Datenübertragung relevanten Parameter von Basisstationen (6) des Mobilfunknetzes in räumlicher Nähe zum Simulator (1) ermittelt und an den Simulator (1) übergeben;
- der Simulator (1) wird unter Berücksichtigung der ermittelten Parameter als eine neue Basisstation (2) betrieben;
- das zu identifizierende Endgerät (7) erkennt den Simulator (1) als neue Basisstation (2) und meldet sich dort an, wobei
- eine Authentifizierungsprozedur gestartet wird, das zu identifizierende Endgerät (7) die Authentifizierungsprozedur als fehlerhaft abweist, der Simulator (1) eine Identifizierungsprozedur startet, in deren Verlauf der Simulator (1) das zu identifizierende Endgerät (7) nach seinen Identifikationsparametern fragt und der Simulator (1) die Identifikationsparameter des zu identifizierenden Endgeräts (7) empfängt; und
- das Endgerät (7) im Umfeld des ersten Protokolls anhand der übermittelten Identifikationsparameter identifiziert wird.

7. Verfahren nach Anspruch 6, **dadurch gekennzeichnet, dass** der Anmeldeversuch des zu identifizierenden Endgeräts (7) bei dem Simulator (1) nach der Identifizierungsprozedur zurückgewiesen wird oder die Verbindung zwischen dem Endgerät (7) und der neuen Basisstation (2) auf andere Weise unterbrochen und/oder gestört wird, das Endgerät (7) zur automatischen Anmeldung bei einer anderen Basisstation einer anderen Funkzelle eines alternativen Mobilfunknetzes, in dem Daten nach einem zweiten, von dem ersten Protokoll abweichenden Protokoll übertragen werden, gezwungen wird, im Umfeld des zweiten Protokolls das zu identifizierende Endgerät (7) im Rahmen der Anmeldung seine Identifikationsparameter übermittelt und der Simulator (1) die Identifikationsparameter des Endgeräts (7) empfängt.

8. Verfahren nach Anspruch 6 oder 7, **dadurch gekennzeichnet, dass** von dem Messsystem (11) als für die Datenübertragung relevante Parameter die von den umgebenden Basisstationen (6) verwendeten Scrambling Codes, Betriebsfrequenzen und/oder Sendestärken ermittelt werden.

9. Verfahren nach einem der Ansprüche 6 bis 8, **dadurch gekennzeichnet, dass** das zu identifizierende Endgerät (7) beim Anmelden bei dem Simulator (1) bzw. im Rahmen der Identifizierungsprozedur mindestens einen der nachfolgenden Identifikationsparameter an den Simulator (1) übermittelt: IMSI, TMSI, P-TMSI und IMEI.

10. Verfahren nach einem der Ansprüche 1 bis 8, **dadurch gekennzeichnet, dass** der Simulator (1) in dem gleichen Frequenzband, jedoch mit höherer Leistung als die den Simulator (1) umgebenden Basisstationen (6) sendet.

11. Verfahren nach einem der Ansprüche 1 bis 9, **dadurch gekennzeichnet, dass** der Simulator (1) in der gleichen oder in einer in räumlicher Nähe befindlichen geografischen Funkzelle (120-128, 130-133) betrieben wird, in deren Basisstation (6) das mobile Endgerät (7) ursprünglich eingebucht ist.

12. Simulator (1) zur Ausführung erfassender oder manipulativer Zugriffe auf ein mobiles Endgerät (7), das in einem digitalen zellulären Mobilfunknetz Daten nach einem ersten Protokoll sendet und empfängt, wobei
- der Simulator (1) in räumlicher Nähe zu dem mobilen Endgerät (7) angeordnet ist,
- der Simulator (1) ein Messsystem (11) zur Ermittlung der für die Datenübertragung relevanten Parameter von Basisstationen (6) des Mobilfunknetzes in räumlicher Nähe zum Simulator (1) im Umfeld des ersten Protokolls aufweist;
- der Simulator (1) Mittel (2; 4; 10) zum Betreiben des Simulators (1) als eine neue Basisstation des Mobilfunknetzes im Umfeld des ersten Protokolls unter Berücksichtigung der ermittelten Parameter aufweist;
- der Simulator (1) Mittel (2; 4; 10) zum Identifizieren des Endgeräts (7) im Umfeld des ersten Protokolls aufweist,
**dadurch gekennzeichnet, dass**
- der Simulator (1) Mittel (10) zum Abweisen des im Umfeld des ersten Protokolls identifizierten Endgeräts (7) zu einem alternativen digitalen zellulären Mobilfunknetz, in dem Daten nach einem von dem ersten Protokoll abweichenden zweiten Protokoll übertragen werden, aufweist;
- der Simulator (1) Mittel (12; 14; 10) zum Betreiben des Simulators (1) als eine neue Basisstation des alternativen Mobilfunknetzes, in dem Daten nach dem zweiten Protokoll übertragen werden, aufweist; und
- der Simulator (1) Mittel (12; 14; 10) zur Ausführung der erfassenden oder manipulativen Zugriffe auf das identifizierte mobile Endgerät (7) in dem alternativen Mobilfunknetz, in dem Daten nach dem zweiten Protokoll übertragen werden, aufweist.

13. Simulator (1) nach Anspruch 12, **dadurch gekennzeichnet, dass** das Messsystem (11) ein Monitor-Endgerät (3) für das digitale zelluläre Mobilfunknetz umfasst, in dem Daten nach einem ersten Protokoll übertragen werden.

14. Simulator (1) nach Anspruch 12 oder 13, **dadurch gekennzeichnet, dass** die Mittel (10) zum Abweisen des im Umfeld des ersten Protokolls identifizierten Endgeräts (7) zu dem alternativen Mobilfunknetz derart ausgestaltet sind, dass die Mittel (10) einen Anmeldeversuch des identifizierten Endgeräts (7) bei dem Simulator (1) abweisen oder dass die Mittel (10) die Verbindung zwischen dem Endgerät (7) und der neuen Basisstation (2) unterbrechen und/oder auf andere Weise stören und der Simulator (1) derart ausgestaltet ist, dass er das Endgerät (7) **dadurch** zur automatischen Anmeldung bei einer anderen Basisstation (12) einer anderen Funkzelle des alternativen Mobilfunknetzes, in dem Daten nach dem zweiten Protokoll übertragen werden, zwingt.

## Claims

1. Method of performing collecting or manipulative accesses to a mobile terminal (7) on a digital cellular mobile radio network on which data is transmitted in accordance with a first protocol, by means of a simulator (1) arranged in physical proximity to the terminal (7),
- the terminal (7) being identified by the determination of parameters identifying the terminal (7) and
- the whole of the identification taking place within the environment of the digital cellular mobile radio network on which data is transmitted in accordance with the first protocol,
**characterised in that**, following the identification of the mobile terminal (7), the said mobile terminal (7) is rejected onto a different mobile radio network on which data is transmitted in accordance with a second protocol, to allow the collecting or manipulative accesses to be performed.

2. Method according to claim 1, **characterised in that** the first protocol is a Universal Mobile Telecommunications System (UMTS) protocol.

3. Method according to claim 1 or 2, **characterised in that** the second protocol is a Global System for Mobile Communications (GSM) protocol.

4. Method according to one of claims 1 to 3, **characterised in that** the collecting or manipulative accesses to the mobile terminal (7) comprise homing in on or locating the terminal (7).

5. Method according to one of claims 1 to 3, **characterised in that** the collecting or manipulative accesses to the mobile terminal (7) comprise tapping into conversations conducted by means of the terminal (7).

6. Method according to one of claims 1 to 5, **characterised in that**, to identify the mobile terminal (7) on the digital cellular mobile radio network on which data is transmitted in accordance with the first protocol, the following steps are performed within the purview of the first protocol:
- the parameters relevant to the transmission of data of base stations (6) on the mobile radio network which are in physical proximity to the simulator (1) are determined and passed to the simulator (1) by a measuring system (11),
- the simulator (1) is operated as a new base station (2) by taking account of the parameters which have been determined,
- the terminal (7) intended for identification recognises the simulator (1) as a new base station (2) and makes a connection request to it,
- in which case an authentication procedure is started, the terminal (7) intended for identification rejects the authentication procedure as incorrect, the simulator (1) starts an authentication procedure in the course of which the simulator (1) asks the terminal (7) intended for identification for its identifying parameters, and the simulator (1) receives the identifying parameters of the terminal (7) intended for identification,
- and the terminal (7) is identified by reference to the identifying parameters transmitted, within the purview of the first protocol.

7. Method according to claim 6, **characterised in that** the attempt of the terminal (7) intended for identification to make a connection request to the simulator (1) after the identifying procedure is rejected or the connection between the terminal (7) and the new base station (2) is broken and/or jammed in some other way, the terminal (7) is compelled to automatically make a connection request to another base station of another radio cell on an alternative mobile radio network on which data is transmitted in accordance with a second protocol different from the first protocol, within the purview of the second protocol the terminal (7) intended for identification transmits its identifying parameters as part of the making of the connection request, and the simulator (1) receives the parameters identifying the terminal (7).

8. Method according to claim 6 or 7, **characterised in that** the scrambling codes, operating frequencies and/or strengths of transmission used by the surrounding base stations (6) are determined by the measuring system (11) as parameters relevant to the transmission of data.

9. Method according to one of claims 6 to 8, **characterised in that**, when it make a connection request to the simulator (1), or as part of the identifying procedure, the terminal (7) intended for identification transmits at least one of the following identifying parameters to the simulator (1): IMSI, TMSI, P-TMSI and IMEI.

10. Method according to one of claims 1 to 8, **characterised in that** the simulator (1) transmits in the same frequency band but at a higher power than the base stations (6) surrounding the simulator (1).

11. Method according to one of claims 1 to 9, **characterised in that** the simulator (1) is operated in the same geographic radio cell (120-128, 130-133), or in one situated in physical proximity thereto, as that on whose base station (6) the mobile terminal (7) originally registered.

12. Simulator (1) for performing collecting or manipulative accesses to a mobile terminal (7) which transmits and receives on a digital cellular mobile radio network in accordance with a first protocol,
- the simulator (1) being arranged in physical proximity to the mobile terminal (7),
- the simulator (1) having a measuring system (11) for determining parameters relevant to the transmission of data of base stations (6) on the mobile radio network which are in physical proximity to the simulator (1), within the purview of the first protocol,
- the simulator (1) having means (2, 4, 10) for operating the simulator (1) as a new base station on the mobile radio network within the purview of the first protocol, by taking into account the parameters which have been determined,
- the simulator (1) having means (2, 4, 10) for identifying the terminal (7) within the purview of the first protocol,
**characterised in that**
- the simulator (1) has means (10) for rejecting the terminal (7) which has been identified within the purview of the first protocol onto an alternative digital cellular mobile radio network on which data is transmitted in accordance with a second protocol different from the first protocol,
- the simulator (1) has means (12, 14, 10) for operating the simulator (1) as a new base station on the alternative mobile radio network on which data is transmitted in accordance with the second protocol,
- the simulator (1) has means (12, 14, 10) for performing the collecting or manipulative accesses to the mobile terminal (7) which has been identified, on the alternative mobile radio network on which data is transmitted in accordance with the second protocol.

13. Simulator (1) according to claim 12, **characterised in that** the measuring system (11) comprises a monitor terminal (3) for the digital cellular mobile radio network on which data is transmitted in accordance with a first protocol.

14. Simulator (1) according to claim 12 or 13, **characterised in that** the means (10) for rejecting the terminal (7) identified within the purview of the first protocol onto the alternative mobile radio network are so designed that the means (10) reject an attempt by the terminal (7) which has been identified to make a connection request to the simulator (1), or **in that** the means (10) break and/or jam the connection between the terminal (7) and the new base station (2) in some other way, and the simulator (1) is so designed that it thereby compels the terminal (7) to automatically make a connection request to another base station (12) in another radio cell on the alternative mobile radio network on which data is transmitted in accordance with the second protocol.

## Revendications

1. Procédé pour effectuer des accès régistratifs et manipulatifs sur un terminal mobile (7) dans un réseau de téléphonie mobile, cellulaire, numérique dans lequel on transmet les données selon un premier protocole à l'aide d'un simulateur (1) installé à proximité spatiale du terminal (7), procédé selon lequel
- on identifie le terminal (7) en déterminant les paramètres d'identification du terminal (7), et
- on effectue toute l'identification dans l'environnement du réseau de téléphonie mobile cellulaire numérique dans lequel, les données sont transmises selon le premier protocole,
procédé **caractérisé en ce qu'**
en liaison avec l'identification du terminal mobile (7), on détourne le terminal mobile (7) pour effectuer les accès régistratifs ou manipulatifs dans un autre réseau de téléphonie mobile dans lequel les données sont transmises selon un second protocole.

2. Procédé selon la revendication 1,
**caractérisé en ce que**
le premier protocole est le protocole UMTS du système de télécommunication mobile, universel.

3. Procédé selon la revendication 1 ou 2,
**caractérisé en ce que**
le second protocole est le protocole GMS, c'est-à-dire le système global de communication mobile.

4. Procédé selon l'une des revendications 1 à 3,
**caractérisé en ce que**
les accès régistratifs ou manipulatifs sur le terminal mobile (7) comprennent le repérage ou la localisation du terminal (7).

5. Procédé selon l'une des revendications 1 à 3,
**caractérisé en ce que**
les accès régistratifs ou manipulatifs sur le terminal mobile (7) comprennent l'écoute des conversations passant par le terminal mobile (7).

6. Procédé selon l'une des revendications 1 à 5,
**caractérisé en ce que**
identifier le terminal mobile (7) dans le réseau de téléphonie mobile cellulaire numérique dont les données sont transmises suivant le premier protocole, se fait dans l'environnement du premier protocole selon les étapes suivantes :
- un système de mesure (11) détermine les paramètres des stations de base (6) du réseau de téléphonie mobile concernés par la transmission des données et se trouvant à proximité spatiale du simulateur (1) et transmet ces paramètres au simulateur (1),
- on fait fonctionner le simulateur (1) comme nouvelle station de base (2) en tenant compte des paramètres déterminés,
- le terminal (7) à identifier reconnaît le simulateur (1) comme nouvelle station de base (2) et se signale à celui-ci **en ce que**,
*on démarre une procédure d'authentification que le terminal (7) à identifier rejette comme erronée, le simulateur (1) lance une procédure d'identification au cours de laquelle le simulateur (1) demande les paramètres d'identification au terminal (7) à identifier et le simulateur (1) reçoit les paramètres d'identification du terminal (7) à identifier, et
*le terminal (7) est identifié dans l'environnement du premier protocole à l'aide des paramètres d'identification transmis.

7. Procédé selon la revendication 6,
**caractérisé en ce que**
- la demande de déclaration du terminal (7) à identifier auprès du simulateur (1) est rejetée après la procédure d'identification ou la liaison entre le terminal (7) et la nouvelle station de base (2) est interrompue et/ou perturbée d'une autre manière, le terminal (7) est forcé à se déclarer automatiquement dans une autre station de base d'une autre cellule radio d'un réseau de téléphonie mobile alternatif, dans lequel les données sont transmises selon un second protocole différent du premier protocole, dans l'environnement du second protocole on transmet les paramètres d'identification du terminal (7) à identifier, dans le cadre de la déclaration, et le simulateur (1) reçoit les paramètres d'identification du terminal (7).

8. Procédé selon la revendication 6 ou 7,
**caractérisé en ce que**
le système de mesure (11) détermine comme paramètre caractéristique de la transmission de données, les codes de brouillage utilisés par les stations de base environnantes (6), les fréquences de fonctionnement et/ou les puissances d'émission.

9. Procédé selon l'une des revendications 6 à 8,
**caractérisé en ce que**
lors de sa déclaration auprès du simulateur (1) ou dans le cadre de la procédure d'identification, le terminal (7) à identifier, transmet vers le simulateur (1) au moins l'un des paramètres d'identification suivants : IMSI, TMSI, P-TMSI et IMEI.

10. Procédé selon l'une des revendications 1 à 8,
**caractérisé en ce que**
le simulateur (1) émet dans la bande de fréquence mais avec une puissance plus élevée que celle des stations de base (6) dans l'environnement du simulateur (1).

11. Procédé selon l'une des revendications 1 à 9,
**caractérisé en ce que**
le simulateur (1) fonctionne dans la même cellule radio (120-128, 130-133) ou dans une cellule géographiquement voisine de la station de base (6) dans laquelle le terminal mobile (7) était enregistré à l'origine.

12. Simulateur (1) pour effectuer des accès régistratifs ou manipulatifs sur un terminal mobile (7) qui reçoit dans un réseau de téléphonie mobile cellulaire numérique, des données envoyées selon un premier protocole,
- le simulateur (1) est installé à proximité spatiale du terminal mobile (7),
- le simulateur (1) comporte un système de mesure (11) pour déterminer les paramètres de la station de base (6) du réseau de téléphonie mobile concerné par la transmission de données se trouvant à proximité spatiale du simulateur (1) dans l'environnement du premier protocole,
- le simulateur (1) comporte des moyens (2; 4; 10) pour faire fonctionner le simulateur (1) comme nouvelle station de base du réseau de téléphonie mobile dans l'environnement du premier protocole en tenant compte des paramètres déterminés,
- le simulateur (1) comporte des moyens (2; 4; 10) pour identifier le terminal (7) dans l'environnement du premier protocole,
simulateur (1) **caractérisé en ce qu'**
- il comporte des moyens (10) pour dévier le terminal (7) à identifier dans l'environnement du premier protocole vers un réseau de téléphonie mobile cellulaire numérique alternatif dans lequel les données sont transmises suivant un second protocole différent du premier protocole,
- des moyens (12; 14; 10) pour faire fonctionner le simulateur (1) comme une nouvelle station de base du réseau de téléphonie mobile alternatif dans lequel les données sont transmises suivant le second protocole, et
- des moyens (12; 14; 10) pour effectuer des accès régistratifs et manipulatifs sur le terminal mobile (7) à identifier dans le réseau de téléphonie mobile alternatif dans lequel les données sont transmises suivant le second protocole.

13. Simulateur (1) selon la revendication 12,
**caractérisé en ce que**
le système de mesure (11) comporte un terminal moniteur (3) pour le réseau de téléphonie mobile cellulaire numérique dans lequel les données sont transmises suivant le premier protocole.

14. Simulateur (1) selon la revendication 12 ou 13,
**caractérisé en ce que**
les moyens (10) pour dévier le terminal (7) à identifier dans l'environnement du premier protocole vers le réseau de téléphonie mobile alternatif sont conçus de façon que les moyens (10) rejettent une requête de déclaration du terminal (7) à identifier par le simulateur (1), ou les moyens (10) qui interrompent la liaison entre le terminal (7) et la nouvelle station de base et/ou perturbent cette liaison d'une autre manière et le simulateur (1), et qu'ils forcent le terminal (7) à se déclarer automatiquement dans une autre station de base (12) d'une autre cellule radio du réseau de téléphonie mobile alternatif dans lequel les données sont transmises suivant le second protocole.
